# EUROPEAN PATENT SPECIFICATION

(11) **EP 1 344 700 B1**
(45) Date of publication and mention of the grant of the patent: **29.09.2004**
(21) Application number: 02024269.9
(22) Date of filing: 31.10.2002
(51) Int. Cl.: B60T 13/52, B60T 17/02

(54) **A brake booster for a vehicle**
Bremskraftverstärker für ein Fahrzeug
Servofrein pour un véhicule

(30) Priority: 13.03.2002 KR 2002013500
(43) Date of publication of application: 17.09.2003
(73) Proprietor: Kia Motors Co., Ltd., Kwang Myung-shi, Gyeonggi-do (KR)
(72) Inventor: Heo, Cheol, Beomseo-eup, Ulju-gun, Ulsan 689-855 (KR)
(74) Representative: Viering, Jentschura & Partner

(56) References cited:
- EP-A- 0 545 121
- EP-A- 0 741 241
- DE-A- 2 719 816
- DE-A- 2 720 098
- US-A- 3 824 792
- US-A- 4 211 200
- US-A- 4 899 708
- US-A- 5 291 916
- US-A- 5 910 098

## Description

### BACKGROUND OF THE INVENTION

### 1. Field of the Invention

The present invention relates to a brake booster for a vehicle, according to the preamble of claim 1 which is able to apply a differential pressure between a negative pressure generated by an intake manifold or a vacuum pump and an atmospheric pressure to a power piston so that a sufficiently increased force can be applied to a wheel cylinder of a brake system of the vehicle.

### 2. Description of the Related Art

Document US-A-5,910,098 discloses a brake booster of this kind.

In general, recent vehicle technology of large size and high speed requires very powerful brake force. However, a depression force to a brake pedal is not sufficient to generate the powerful brake force, and a brake booster is introduced to solve the problem. The brake booster can increase the braking force against a wheel of the vehicle without increasing the pushing force to the brake pedal, so that driver's fatigue can be lessened and safety of the vehicle can also be improved.

In addition to the piston of a master cylinder, a power piston is installed to the brake booster, and the differential pressure between the vacuum and the atmospheric pressure or a pressured air is applied to the power piston thereby to generate an increased hydraulic pressure, which increases the brake force against the wheel of the vehicle in the end.

The brake booster using a vacuum applies the differential pressure between a negative pressure, which is generated by the intake manifold or the vacuum pump, and the atmospheric pressure to the power piston therein to thereby apply a magnified force to the wheel cylinder of the brake system of the vehicle. The brake booster is classified into a separated type in which the brake booster can be separately installed from a master cylinder and a one-body type in which the brake booster is installed in one body with the master cylinder.

The brake booster is installed between the brake pedal and the master cylinder, and therefore, when a driver of the vehicle pushes the brake pedal to stop a moving vehicle, the brake booster boosts the pressed force on the brake pedal by a boost ratio and applies the boosted force to the master cylinder.

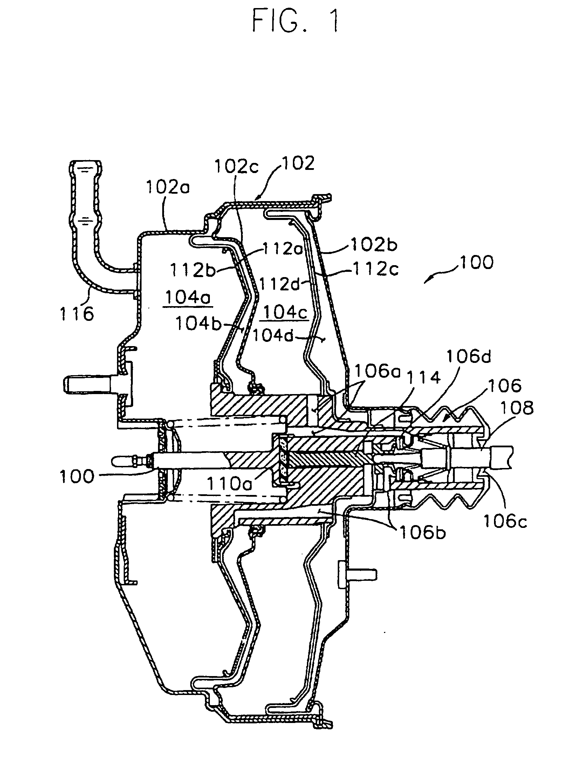

FIG. 1 is a schematic structural view showing a conventional brake booster.

Referring to FIG. 1, the conventional brake booster includes a housing 102 having a front cell 102a and a rear cell 102b closely connected with each other, a center plate 102c for separating an inside of the housing 102 into a front chamber and a rear chamber, a valve body 106 for controlling an inflow of air installed in such a structure that a first end thereof glidingly penetrates a center of the center plate 102c and a second end thereof outwardly protrudes from a center of an opening portion of the rear cell 102b, an input axle 108 operated according to a pushing force of the brake pedal (not shown), and an output axle 110 to which a shifting force caused by displacement of the input axle 108 is transferred.

The front chamber is separated into a front uniform pressure chamber 104a and a front variable pressure chamber 104b by a front diaphragm 112a and a front power piston 112b, and the rear chamber is separated into a rear uniform pressure chamber 104c and a rear variable pressure chamber 104d by a rear diaphragm 112c and a rear power piston 112d.

The front diaphragm 112a and the front power piston 112b, the rear diaphragm 112c and the rear power piston 112d, and the center plate 102c are combined with the circumference of a first end of the valve body 106. A second end of the valve body 106 to which an air suction portion 106c is installed is connected to the atmospheric air through a center of the rear cell 102b. A uniform pressure path 106a, which is connecting the uniform pressure chamber 104a and 104c and the variable pressure chamber 104b and 104d, a variable pressure path 106b, which is connecting the variable pressure chamber 104b and 104d and the atmospheric air, are installed in the valve body 106. A control plunger 114 is coupled to an end of the input axle 108 to be capable of sliding along the input axle 108. A reaction disk 110a is disposed between the control plunger 114 and the output axle 110 for increasing the applied force and transferring to the output axle 110. A popper valve 106d made of elastic material is installed in the valve body 106 for controlling the inflow of the air according to an operation of the input axle 108. Namely, the popper valve 106d selectively opens or closes the uniform pressure path 106a and the variable pressure path 106b as the operation of the input axle 108.

The above-described conventional brake booster operates as follows:

At first, the brake pedal is not pushed, and therefore, all of the uniform pressure chamber 104a and 104c and the variable pressure chamber 104b and 104d are kept up under vacuum by a vacuum tube 116 connected with the intake manifold (not shown) in which the vacuum is generated. When the driver pushes the brake pedal, the input axle moves forward and the control plunger 114 is pushed backward, so that an end portion of the control plunger 114 directly pushed the reaction disk 110a. In addition, the shifting of the control plunger 114 makes the variable pressure path 106b opened to the atmospheric air, and the atmospheric air flows into the variable pressure chamber 104b and 104d through the variable pressure path 106b. At that time, the atmospheric air flows in an instant, and therefore, the front and rear diaphragm 112a and 112c, the front and rear power piston 112b and 112d and the valve body 106 are pushed to the uniform pressure chamber 104a and 104c. Accordingly, an output force boosted more than an input force by the brake booster is transferred to the master cylinder through the reaction disk 110a and the output axle 110 to thereby generate a braking hydraulic pressure.

At that time, a first force transferred from the control plunger 114 and a second force transferred from the valve body 106 are simultaneously applied to the reaction disk 110a. Therefore, a force ratio of the differential pressure to a brake pedal force applied by the driver is determined by a surface ratio of a contacting surface of the valve body 106 to a cross sectional surface of a front end portion of the control plunger 114.

As described in the above, the brake booster using the differential pressure between the vacuum in the uniform pressure chamber and the atmospheric pressure in the variable pressure chamber requires that the uniform pressure chamber should be always under vacuum. However, the uniform pressure chamber cannot be kept up under vacuum since driving conditions and operating conditions of an engine including idling state of the engine are different every time and the atmospheric pressure is different according to geographical features. Therefore, a braking failure may be generated, and an accident can be caused as the braking distance is increased.

As for the vehicle including an automatic transmission, an excessive operation of an electrical instrument such as an air-conditioner leads to an over-load to the engine, which results in RPM (revolution per minute) increase of the engine. Therefore, a throttle valve through which an air is supplied to the engine is opened too much, and as a result, flow resistance of the air is reduced. Namely, air volume supplied through the throttle valve is increased, and consequently the negative pressure of the intake manifold is decreased. Therefore, the vacuum state of the intake manifold, which decides the vacuum state of the uniform pressure chamber through the vacuum tube, is not sufficient, and the braking distance is increased.

When driving the high-elevated areas, the atmospheric pressure is lower than that of the low-elevated areas. Therefore, the differential pressure between the vacuum in the uniform pressure chamber and the atmospheric pressure is reduced, which also increases the braking distance.

### SUMMARY OF THE INVENTION

The present invention has been made to solve the above problems of the related art. Therefore, an object of the present invention is to provide a brake booster for a vehicle, which can stabilize the braking characteristics of a vehicle by uniformly maintaining the vacuum degree in the uniform pressure chamber.

To achieve the object of the present invention, there is provided an improved brake booster for a vehicle including a housing having a front cell and a rear cell closely combined with each other, a power piston and a diaphragm for separating an inside of the housing into a uniform pressure chamber and a variable pressure chamber, a valve having a first end to which the power piston and the diaphragm are closely combined along a circumference thereof and having a second end connected to an atmospheric air with penetrating the rear cell, a control plunger for controlling an inflow of the atmospheric air to the variable pressure chamber, the control plunger being installed to move forwardly and backwardly in a cylinder hall formed inside the valve along a valve axis, an input axle having a first end combined with the control plunger and a second end combined with a brake pedal, and an output axle contacting to the first end of the valve with an intermediary of a reaction disk positioned on a center of the first end of the valve so that a shifting force caused by displacement of the power piston and the diaphragm is capable of being transferred thereto, wherein the improvement comprises a vacuum tube for forming an inside of the uniform pressure chamber into a vacuum, a first end thereof being connected to an intake manifold and a second end thereof penetrating through and extended into the uniform pressure chamber; a venturi tube in which a venturi portion is formed, the venturi tube being diverged from the vacuum tube inside the uniform pressure chamber; a first air suction tube for sucking away an inside air of the uniform pressure chamber, the first air suction tube being connected to the venturi portion; and a second air suction tube for sucking in an atmospheric air, the second air suction tube having a first end penetrating through the uniform pressure chamber and connected to the venturi portion, and a second end exposed to the atmospheric air.

An air filter assembly for filtering the atmospheric air is further installed to the second end of the second air suction tube. Furthermore, a check valve for controlling airflow in the second air suction tube and the vacuum tube is also installed inside the second air suction tube and the vacuum tube respectively.

According to the present invention, the atmospheric air is filtered through the air filter assembly and provided to the venturi portion so that a velocity of the air is increased and a pressure of the air is decreased according as a cross section area of the venturi portion is reduced. The decreased pressure of the air makes an air inside the uniform pressure chamber sucked out. Namely, the inside of the uniform pressure chamber can be always under sufficient vacuum irrespective of driving conditions of an engine of the vehicle and a change of the atmospheric pressure.

### BRIEF DESCRIPTION OF THE DRAWINGS

The above and other objects, features and advantages of the present invention will become more apparent from the following detailed description of the preferred embodiments thereof made with reference to the attached drawings, of which:
FIG. 1 is a schematic structural view showing a conventional brake booster;
FIG. 2 is a schematic structural view showing a brake booster according to one embodiment of the present invention; and
FIG. 3 is a schematic structural view showing a flow of inner air in the brake booster as shown in FIG. 2.

### DESCRIPTION OF THE PREFERRED EMBODIMENTS

Hereinafter, preferred embodiments of the present invention will be described in detail with reference to accompanying drawings.

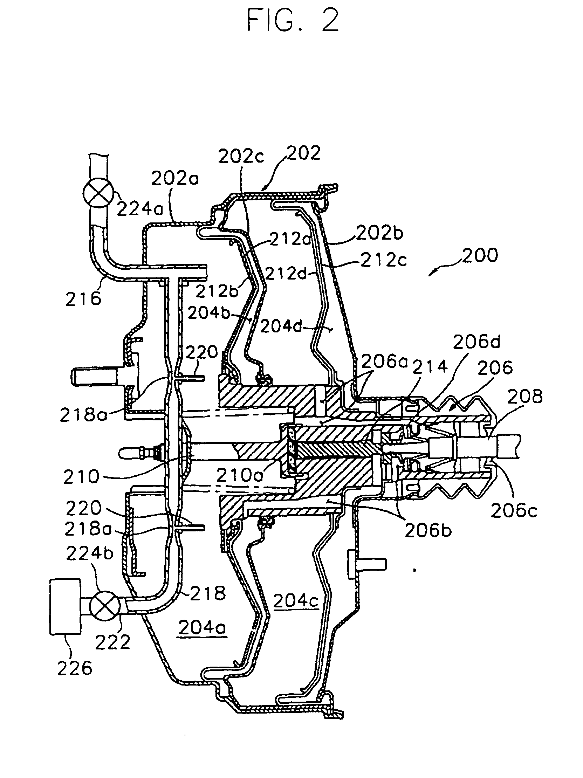

FIG. 2 is a schematic structural view showing a brake booster according to an embodiment of the present invention.

Referring to FIG. 2, the brake booster 200 according to an embodiment of the present invention includes a housing 202 having a front cell 202a and a rear cell 202b closely connected with each other, a center plate 202c for separating an inside of the housing 202 into a front chamber and a rear chamber, a valve body 206 for controlling an inflow of air installed in such a structure that a first end thereof glidingly penetrates a center of the center plate 202c and a second end thereof outwardly protrudes from a center of an opening portion of the rear cell 202b, an input axle 208 operated according to a pushing force of the brake pedal (not shown), and an output axle 210 to which a shifting force caused by displacement of the input axle 208 is transferred.

The front chamber is separated into a front uniform pressure chamber 204a and a front variable pressure chamber 204b by a front diaphragm 212a and a front power piston 212b, and the rear chamber is separated into a rear uniform pressure chamber 204c and a rear variable pressure chamber 204d by a rear diaphragm 212c and a rear power piston 212d.

The front diaphragm 212a and the front power piston 212b, the rear diaphragm 212c and the rear power piston 212d, and the center plate 202c are combined with the circumference of a first end of the valve body 206. A second end of the valve body 206 to which an air suction portion 206c is installed is connected to the atmospheric air through a center of the rear cell 202b. A uniform pressure path 206a, which is connecting the uniform pressure chamber 204a and 204c and the variable pressure chamber 204b and 204d, a variable pressure path 206b, which is connecting the variable pressure chamber 204b and 204d and the atmospheric air, are installed in the valve body 206. A control plunger 214 is coupled to an end of the input axle 208 to be capable of sliding along the input axle 208. A reaction disk 210a is disposed between the control plunger 214 and the output axle 210 for increasing the applied force and transferring to the output axle 210. A popper valve 206d made of elastic material is installed in the valve body 206 for controlling the inflow of the air according to an operation of the input axle 208. Namely, the popper valve 206d selectively opens or closes the uniform pressure path 206a and the variable pressure path 206b as the operation of the input axle 208.

A vacuum tube 216, which is connected to an intake manifold (not shown), penetrates through and extends into the front uniform pressure chamber 204a, and a first end of a venturi tube 218, in which a venturi portion is formed, is connected to the vacuum tube 216 inside the front uniform pressure chamber 204a. The venturi tube 218 is diverged from the vacuum tube 216, and the venturi portion 218a is connected to a first air suction tube 220 for sucking away an inner air of the front and the rear uniform pressure chamber 204a and 204c. A second air suction tube 222 for sucking in the atmospheric air is connected to a second end of the venturi tube 218. A first end of the second air suction tube 222 is extended into the front uniform pressure chamber 204a and connected to the venturi tube 218, and a second end of the second air suction tube 222 is exposed to the atmospheric air.

A first check valve 224a and a second check valve 224b are installed to the vacuum tube 216 and the second suction tube 222 for controlling a flow of the inner air in the vacuum tube 216 and the second suction tube 222, and an air filter assembly 226 is installed to a second end of the second suction tube 222 for filtering the atmospheric air.

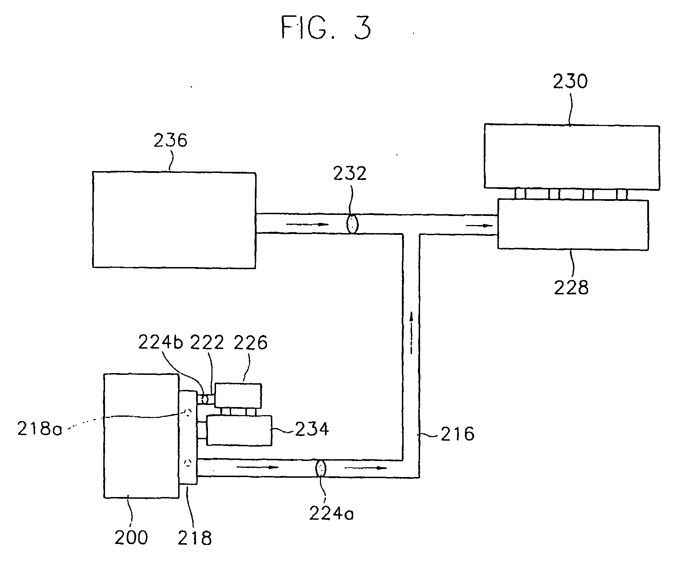

FIG. 3 is a schematic structural view showing a flow of inner air in the brake booster as shown in FIG. 2.

Referring to FIG. 3, the atmospheric air flows into the second air suction tube 222 after being filtered through the air filter assembly 226. Then the air is provided to the venturi portion 218a of the venturi tube 218 so that a velocity of the air is increased and a pressure of the air is decreased according as a cross section area of the venturi portion is reduced. The decreased pressure of the air makes an inner air inside the front and the rear uniform pressure chamber 204a and 204b sucked out through the first air suction tube 220, and the sucked-out air is moved into the intake manifold 228 together with an inflowing air through the vacuum tube 216.

That is, when a throttle valve is excessively opened for over-load of an engine 230 or a vehicle is driving in the high-elevated areas, the venturi tube 218 can compensate for insufficient vacuum state inside the brake booster 200. Therefore, a vacuum making efficiency of the brake booster can be improved, and accordingly, the braking characteristics of the vehicle can also be stabilized. Both of non-described numeral numbers 234 and 236 show a master cylinder and an air-cleaner of the vehicle.

While the number of the venturi portion 218a and the first air suction tube 220 is two respectively according to the above-described embodiment of the present invention, it is natural that the number of the venturi portion 218a and the first air suction tube 220 can not be restricted in two and may be varied according to a type of the vehicle and the vacuum state.

According to an embodiment of the present invention, despite of the facts having an effect on making a vacuum inside the brake booster, such as driving conditions or the atmospheric pressure condition, the venturi tube and the first air suction tube, which are installed in the brake booster, and the second air suction tube connected to the venturi tube can efficiently make the inside of the brake booster be a vacuum.

Accordingly, the vacuum state of the brake booster can be uniformly maintained, which prevents an increasing of the braking distance due to an insufficient inner vacuum of the brake booster and stabilizes the braking characteristics of the vehicle. Furthermore, the driver can have better feelings when pushing the brake pedal.

Although the preferred embodiments of the present invention have been described, it is understood that the present invention should not be limited to these preferred embodiments but various changes and modifications can be made by one skilled in the art within the scope of the present invention as hereinafter claimed.

## Claims

1. A brake booster for a vehicle including a housing (102) having a front cell (102a) and a rear cell (102b) closely combined with each other, a power piston (112b,112d) and a diaphragm (112a,112c) for separating an inside of the housing into a uniform pressure chamber (104a,104c) and a variable pressure chamber (104b,104d), a valve (106) having a first end to which the power piston and the diaphragm (112a,112c) are closely combined along a circumference thereof and having a second end connected to an atmospheric air with penetrating the rear cell (102b), a control plunger (114) for controlling an inflow of the atmospheric air to the variable pressure chamber, the control plunger being installed to move forwardly and backwardly in a cylinder hall formed inside the valve (106d) along a valve axis, an input axle (108) having a first end combined with the control plunger (114) and a second end combined with a brake pedal, and an output axle contacting to the first end of the valve (106d) with an intermediary of a reaction disk (110a) positioned on a center of the first end of the valve so that a shifting force caused by displacement of the power piston and the diaphragm is capable of being transferred thereto, **characterized by**:
A vacuum tube (216) for forming an inside of the uniform pressure chamber into a vacuum, a first end thereof being connected to an intake manifold and a second end thereof penetrating through and extended into the uniform pressure chamber;
a venturi tube (218) in which a venturi portion is formed, the venturi tube being diverged from the vacuum tube inside the uniform pressure chamber;
a first air suction tube (220) for sucking away an inside air of the uniform pressure chamber, the first air suction tube being connected to the venturi portion; and
a second air suction tube (222) for sucking in an atmospheric air, the second air suction tube having a first end penetrating through the uniform pressure chamber and connected to the venturi portion, and a second end exposed to the atmospheric air.

2. The brake booster as claimed in claim 1, further comprising an air filter assembly for filtering the atmospheric air, the air filter assembly being installed to the second end of the second air suction tube.

3. The brake booster as claimed in claim 2, further comprising a check valve for controlling a flow of inner air in the second air suction tube, the check valve being installed inside the second air suction tube.

4. The brake booster as claimed in claim 1, further comprising a check valve for controlling a flow of inner air in the vacuum tube, the check valve being installed inside the vacuum tube.

## Patentansprüche

1. Bremskraftverstärker für ein Fahrzeug, aufweisend ein Gehäuse (102) mit einer vorderen Zelle (102a) und einer hinteren Zelle (102b), die eng miteinander verbunden sind, einen Kraftstellkolben (112b, 112d) und eine Membran (112a, 112c) zum Trennen einer Innenseite des Gehäuses in eine Einheitsdruckkammer (104a, 104c) und eine Wechseldruckkammer (104b, 104d), ein Ventil (106) mit einem ersten Ende, mit welchem der Kraftstellkolben und die Membran (112a, 112c) entlang eines Umfangs davon eng verbunden sind, und mit einem zweiten Ende, das bei Durchdringen der hinteren Zelle (102b) mit einer atmosphärischen Luft verbunden ist, einen Steuerkolben (114) zur Steuerung eines Zustroms der atmosphärischen Luft zu der Wechseldruckkammer, wobei der Steuerkolben installiert ist, um sich in einem Zylinderraum, der innerhalb des Ventils (106d) ausgebildet ist, entlang einer Ventilachse vor und zurück zu bewegen, eine Antriebsachse (108) mit einem ersten Ende, das mit dem Steuerkolben (114) verbunden ist, und einem zweiten Ende, das mit einem Bremspedal verbunden ist, und eine Abtriebsachse, die an dem ersten Ende des Ventils (106d) mit einem Zwischenstück einer Reaktionsscheibe (110a) kontaktiert, die in einer Mitte des ersten Endes des Ventils positioniert ist, so dass eine Schubkraft, die durch Verschiebung des Kraftstellkolbens und der Membran verursacht wird, darauf übertragbar ist, **gekennzeichnet durch**:
ein Vakuumrohr (216) zur Formierung einer Innenseite der Einheitsdruckkammer in ein Vakuum, wobei ein erstes Ende davon mit einem Saugrohr verbunden ist und ein zweiten Ende davon die Einheitsdruckkammer durchdringt und sich in diese hinein erstreckt;
ein Venturi-Rohr (218), in welchem ein Venturi-Abschnitt ausgebildet ist, wobei das Venturi-Rohr innerhalb der Einheitsdruckkammer von dem Vakuumrohr divergiert;
ein erstes Luftsaugrohr (220) zum Wegsaugen einer Innenluft der Einheitsdruckkammer, wobei das erste Luftsaugrohr mit dem Venturi-Abschnitt verbunden ist; und
ein zweites Luftsaugrohr (222) zum Ansaugen einer atmosphärischen Luft, wobei das zweite Luftsaugrohr ein erstes Ende, das die Einheitsdruckkammer durchdringt und mit dem Venturi-Abschnitt verbunden ist, und ein zweites Ende aufweist, das zu der atmosphärischen Luft freigelegt ist.

2. Bremskraftverstärker nach Anspruch 1, ferner aufweisend eine Luftfilteranordnung zum Filtern der atmosphärischen Luft, wobei die Luftfilteranordnung an dem zweiten Ende des zweiten Luftsaugrohres installiert ist.

3. Bremskraftverstärker nach Anspruch 2, ferner aufweisend ein Rückschlagventil zur Steuerung einer Strömung von Innenluft in dem zweiten Luftsaugrohr, wobei das Rückschlagventil innerhalb des zweiten Luftsaugrohres installiert ist.

4. Bremskraftverstärker nach Anspruch 1, ferner aufweisend ein Rückschlagventil zur Steuerung einer Strömung von Innenluft in dem Vakuumrohr, wobei das Rückschlagventil innerhalb des Vakuumrohres installiert ist.

## Revendications

1. Servofrein pour véhicule incluant un boîtier (102) comportant une cellule avant (102a) et une cellule arrière (102b) étroitement combinées l'une à l'autre, un piston de puissance (112b, 112d) et un diaphragme (112a, 112c) destiné à séparer l'intérieur du boîtier en une chambre à pression uniforme (124a, 104c) et une chambre à pression variable (104b, 104d), un clapet (106) présentant une première extrémité à laquelle le piston de puissance et le diaphragme (112a, 112c) sont étroitement combinés le long d'une circonférence de celle-ci et présentant une deuxième extrémité reliée à l'air extérieur en traversant la cellule arrière (102b), un piston de commande (114) destiné à commander une admission d'air extérieur vers la chambre à pression variable, le piston de commande étant agencé de façon à se déplacer en avant et en arrière dans un creux de cylindre ménagé à l'intérieur du clapet (106d) le long d'un axe de clapet, un axe d'entrée (108) présentant une première extrémité combinée au piston de commande (114) et une deuxième extrémité combinée à une pédale de frein, et un axe de sortie en contact avec la première extrémité du clapet (106d) via un disque de réaction (110a) positionné au centre de la première extrémité du clapet de sorte qu'une force de déplacement causée par le déplacement du piston de puissance et le diaphragme est apte à être transférée à celui-ci, **caractérisée par**
un tube à vide (216) destiné à placer l'intérieur de la chambre à pression uniforme sous vide, une première extrémité dudit tube étant reliée à un collecteur d'admission et une deuxième extrémité dudit tube entrant et s'étendant dans la chambre à pression uniforme ;
un tube de Venturi (218) dans lequel une portion de Venturi est formée, le tube de Venturi s'écartant du tube à vide à l'intérieur de la chambre à pression uniforme ;
un premier tube d'aspiration d'air (220) destiné chasser l'air intérieur de la chambre à pression uniforme, le premier tube d'aspiration d'air étant relié à la portion de Venturi ; et
un deuxième tube d'aspiration d'air (222) destiné à injecter de l'air extérieur, le deuxième tube d'aspiration d'air présentant une première extrémité entrant dans la chambre à pression uniforme et reliée à la portion de Venturi, et une deuxième extrémité exposée à l'air extérieur.

2. Servofrein selon la revendication 1, comprenant en outre un ensemble de filtre à air destiné à filtrer l'air extérieur, l'ensemble de filtre à air étant placé sur la deuxième extrémité du deuxième tube d'aspiration d'air.

3. Servofrein selon la revendication 2, comprenant en outre un clapet de non-retour destiné à commander un flux d'air intérieur dans le deuxième tube d'aspiration d'air, le clapet de non-retour étant installé à l'intérieur du deuxième tube d'aspiration d'air.

4. Servofrein selon la revendication 1, comprenant en outre un clapet de non-retour destiné à commander un flux d'air intérieur dans le tube à vide, le clapet de non-retour étant placé à l'intérieur du tube à vide.
